**Europäisches Patentamt**

**European Patent Office**

**Office européen des brevets**

(19)

(11) **EP 0 114 235 B2**

(12) # NEUE EUROPÄISCHE PATENTSCHRIFT

(45) Veröffentlichungstag und Bekanntmachung des Hinweises auf die Entscheidung über den Einspruch:
**27.11.1996   Patentblatt 1996/48**

(51) Int Cl.$^6$: **G01N 27/417**

(45) Hinweis auf die Patenterteilung:
**20.05.1987   Patentblatt 1987/21**

(21) Anmeldenummer: **83111474.9**

(22) Anmeldetag: **17.11.1983**

(54) **Verfahren zur Messung der Sauerstoffkonzentration in Gasgemischen**

Method for measuring oxygen in gas mixtures

Procédé pour mesurer le taux d'oxygène dans des mélanges gazeux

(84) Benannte Vertragsstaaten:
**AT BE CH FR GB IT LI NL SE**

(30) Priorität: **24.12.1982  DE 3247920**

(43) Veröffentlichungstag der Anmeldung:
**01.08.1984   Patentblatt 1984/31**

(73) Patentinhaber: **LAMTEC Mess- und Regeltechnik für Feuerungen GmbH & Co KG**
**69190 Walldorf (DE)**

(72) Erfinder:
- **Rohr, Franz-Josef, Dr.**
  **D-6941 Abtsteinach (DE)**
- **Meinhold, Henner, Dr.**
  **D-6902 Sandhausen (DE)**

(56) Entgegenhaltungen:
| | |
|---|---|
| EP-A- 0 047 434 | DE-A- 2 711 880 |
| DE-A- 2 946 440 | US-A- 3 860 498 |
| US-A- 4 177 770 | US-A- 4 272 329 |

EP 0 114 235 B2

## Beschreibung

Die Erfindung bezieht sich auf ein Verfahren zur Messung der freien Sauerstoffkonzentration in Gasgemischen, insbesondere Verbrennungsgasen gemäß dem Oberbegriff des einzigen Patentanspruchs.

Aus der DE-A-2 711 880 ist ein Meßfühler zum Messen der Sauerstoffkonzentration in Gasen bekannt. Der Meßfühler weist eine gasdurchlässige Meßelektrode auf, der das zu untersuchende Gas zuführbar ist. Ferner ist eine Gegenelektrode vorgesehen, der ein Bezugsgas mit bekannter Sauerstoffkonzentration zuführbar ist. Die beiden Elektroden sind durch einen Festelektrolyten voneinander getrennt. Die Meßelektrode ist mit einer Beschichtung überzogen, welche für Sauerstoff einen definierten Diffusionswiderstand aufweist. Durch diese Beschichtung wird erreicht, daß jedes Sauerstoffmolekül, das zu der Meßelektrode gelangt, durch die Elektrodenreaktion sofort umgesetzt wird. Hieraus ergibt sich zwischen der Meßelektrode und der Gegenelektrode ein Strom, dessen Höhe allein durch die Diffusion bestimmt wird.

In der DE-A-2 946 440 ist ein Verfahren zur Gewinnung einer Steuergröße für die Regelung des Kraftstoff-Luftverhältnisses von Brennkraftmaschinen beschrieben. Hierfür wird die eingangs beschriebene Grenzstromsonde verwendet. Die Dynamik dieser Grenzstromsonden wird durch die oben erwähnten Diffusionsvorgänge bestimmt. Bei einer sprungartigen Sauerstoffkonzentrationsänderung reagiert die Grenzstromsonde jedoch nur verzögert. Um diese Verzögerung auszugleichen, wird dann an die Sonde nicht nur die üblicherweise anliegende Grundmeßspannung $U_o$, sondern eine Spannung angelegt, die sich aus der Grundmeßspannung $U_o$ und einer Zusatzspannung $\Delta U$ ergibt. Mit dieser Zusatzspannung $\Delta U$ wird die verzögerte Reaktion der Grenzstromsonde auf die Sauerstoffkonzentrationsänderung ausgeglichen. Die zu der Grundmeßspannung $U_o$ addierte Zusatzspannung $\Delta U$ wird mit Hilfe der Luftmengen-, der Kraftstoffmengen- undloder Drehzahlsignale oder weiterer Zusatzparameter gebildet. $\Delta U$ entspricht dem im jeweiligen Betriebszustand geschätzten Lambdawert.

Aus der DE-A-1 954 663 ist eine Meßvorrichtung bekannt, die einen Festelektrolyten aufweist, der mit zwei Elektroden versehen ist. Zusätzlich weist die Meßvorrichtung im Bereich des Festelektrolyten ein Heizelement auf, mit dem die Meßvorrichtung auf einer Arbeitstemperatur von 660° bis 1000° gehalten wird. An die beiden Elektroden ist eine Gleichspannungsquelle angeschlossen. Die Größe der Gleichspannungsquelle ist so gewählt, daß zwischen den Elektroden nur ein diffusionsbegrenzter Strom fließen kann. Die Größe dieses Stromes wird durch die Geschwindigkeit bestimmt, mit der der Sauerstoff aus der Gasprobenmenge in die Oberfläche der Meßelektrode diffundiert.

Aus der DE-A-3 033 429 ist eine Meßvorrichtung bekannt, deren erste als Kathode dienende Elektrode mit dem zu messenden Gasstrom beaufschlagt wird. Hierdurch wird der im Gas enthaltene freie Sauerstoffanteil elektrolytisch aus dem Gasstrom extrahiert, in Form von Sauerstoffionen durch den Festelektrolyten zur zweiten Elektrode transportiert und dort wieder zu Sauerstoffmolekülen rekombiniert. Durch die Sauerstoffionen, die durch Festelektrolyten wandern, kommt es zur Bildung eines Stromsignals zwischen den Elektroden. Dieses Stromsignal ist von der Temperatur unabhängig, sofern bei diesem Meßvorgang die Arbeitstemperatur oberhalb eines kritischen Wertes von 350° gehalten wird. Während der Messung wird die Probegasmenge mit einer kritischen-Düse konstant gehalten.

In der DE-A-2 945 698 ist eine elektrochemische Meßvorrichtung für die Bestimmung des Sauerstoffgehaltes in Gasen beschrieben, die einen rohrförmigen Festelektrolyten aufweist, der einseitig geschlossen ist. Auf der Außenfläche des Festelektrolyten ist eine Meßelektrode angeordnet, während die Gegenelektrode auf der Innenseite des Festelektrolytrohres angeordnet ist. Das Festelektrolytrohr wird von einem Hüllrohr umgeben, so daß zwischen beiden ein Ringraum mit definierter lichter Weite gebildet wird. In Strömungsrichtung gesehen, ist hinter der Meßelektrode eine Düse in den Gasstrom eingebaut, deren Durchmesser so groß gewählt ist, daß das Gas mit Schallgeschwindigkeit an der Meßelektrode vorbeiströmt.

Der Erfindung liegt die Aufgabe zugrunde, ein Verfahren zur Sauerstoffmessung mit einer ein Meßsignal als Meßgröße abgebenden Meßvorrichtung aufzuzeigen, bei dem die elektrolytische Zersetzung sauerstoffhaltiger Verbindungen vermieden und damit eine exakte Bestimmung des freien Sauerstoffgehalts in einem Abgas ermöglicht wird.

Diese Aufgabe wird erfindungsgemäß durch die im Patentanspruch enthaltenen Merkmale gelöst.
Die Erfindung wird nachfolgend anhand von Zeichnungen erläutert.

Es zeigen:

Figur 1: den prinzipiellen Aufbau einer Meßvorrichtung mit einem Stromsignal als Meßgröße,
Figur 2: die Strom/Spannungs-Kennlinie der in Figur 1 dargestellten Meßvorrichtung,
Figur 3: eine Vorrichtung zur Bildung der Spannung $U_S$ für die Meßvorrichtung gemäß Figur 1,
Figur 4: eine Variante der in Figur 3 dargestellten Vorrichtung.

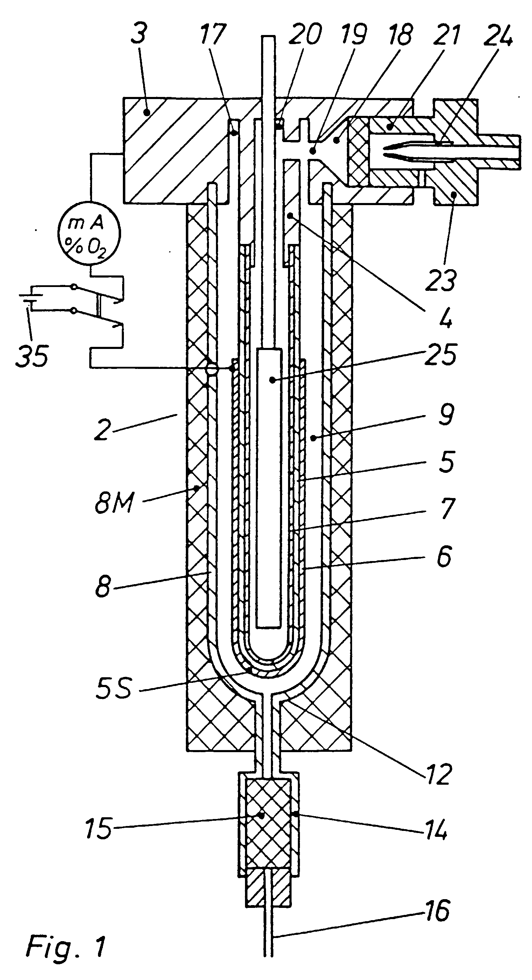

Die in Figur 1 dargestellte elektrochemische Meßvorrichtung 1 umfaßt eine rohrförmige Meßzelle 2 mit einem die Meßzelle 2 abschließenden Flansch 3 aus Metall. Aus der einen Grundfläche des Flansches 3 ragt ein kreisringförmiger Vorsprung 4, an dessen freiem Ende ein Festelektrolytrohr 5 befestigt ist. Dieses ist auf seiner Außenseite mit der ersten Elektrode 6 versehen, die vom Ende 5S des Festelektrolytrohres 5 aus gesehen etwa zwei Drittel der Festelektrolytrohrlänge bedeckt. Auf der Innenseite des Festelektrolytrohres 5 ist die zweite Elektrode 7 vorgesehen, die sich vom Ende 5S bis zur Befestigungsstelle des Festelektrolytrohres 5 am Vorsprung 4 erstreckt und in elektrisch leitendem Kontakt mit dem Vorsprung 4 steht. Die beiden Elektroden 6 und 7 bestehen aus einer porösen elektronenleitenden Schicht, durch welche der Sauerstoff ungehindert diffundieren kann. Das mit den Elektroden 6 und 7 versehene Festelektrolytrohr 5 ist von einem Hüllrohr 8 umgeben, so daß zwischen der ersten Elektrode 6 und dem Hüllrohr ein zusammenhängender Freiraum 9 verbleibt, wobei die lichte Weite dieses Freiraumes 9 in radialer Richtung etwa 0,3 bis 2 mm, vorzugsweise etwa 0,5 mm beträgt. Das Hüllrohr 8 ist in einer kreisringförmigen Aussparung des Flansches 3 gasdicht eingesetzt und befestigt. Der Raum 9 zwischen dem Hüllrohr 8 und dem Festelektrolyten ist Bestandteil des Meßgaskanals. Am unteren Ende 12 des Hüllrohres ist ein enges Gaszuleitungsrohr vorgesehen, das in einer Erweiterung 14 ein Gasfilter 15 aufweist, das z.B. aus Glaswolle oder einem porösen Keramikkörper bestehen kann. Die Erweiterung 14 ist mit einem Kapillarrohr 16 versehen, durch welches das zu messende Gas zugeführt wird. Das Hüllrohr 8 ist schließlich noch mit einem Isoliermantel 8M umgeben, der sich bis zum Flansch 3 erstreckt. Der am Flansch 3 angeordnete ringförmige Vorsprung 4 ist von einem im Flansch 3 verlaufenden konzentrischen Ringspalt 17 umgeben, der einerseits in den Raum 9 mündet, und der andererseits an einen quer zur Längsachse der Meßzelle 2 verlaufenden im Querschnitt kreisförmigen Raum 18 angeschlossen ist. Die senkrecht zur Längsachse der Meßzelle 2 verlaufende Anschlußbohrung 19 ist hierbei in Richtung zur Längsachse weitergeführt, so daß auch der Innenraum 20 des Vorsprungs 4, welcher mit dem Innenraum des Festelektrolyten 5 eine Einheit bildet, an den Raum 18 angeschlossen ist. Dieser ist vorzugsweise als Bohrung ausgebildet, und weist ein Gewinde auf, in welches ein Einsatz 21 mit Hilfe eines am Einsatz vorgesehenen Kopfes 23 eingeschraubt ist. Der in den Grundkörper 3 ragende Bereich des Einsatzes 21 umfaßt ein scheibenförmiges Filter.

In dem Kopf 23 des Einsatzes 21 ist eine Düse 24 eingebaut, welche als Strömungskonstanthalter dient. Im Inneren des Festelektrolytrohres 5 ist eine Heizung 25 installiert, mit welcher die Meßzelle 2 auf der erforderlichen Betriebstemperatur gehalten werden kann. Um an die beiden Elektroden 6 und 7 die erforderliche Versorgungsspannung legen zu können, ist von der ersten Elektrode 6 eine elektrische Leitung (hier nicht dargestellt) radial nach außen geführt. Die zweite Elektrode 7 ist über den Zentriervorsprung und über einen weiteren Vorsprung des Flansches 3 mit diesem elektrisch leitend verbunden. An den Flansch 3 und die oben erwähnte elektrische Leitung wird die Versorgungsspannung $U_S$ angelegt.

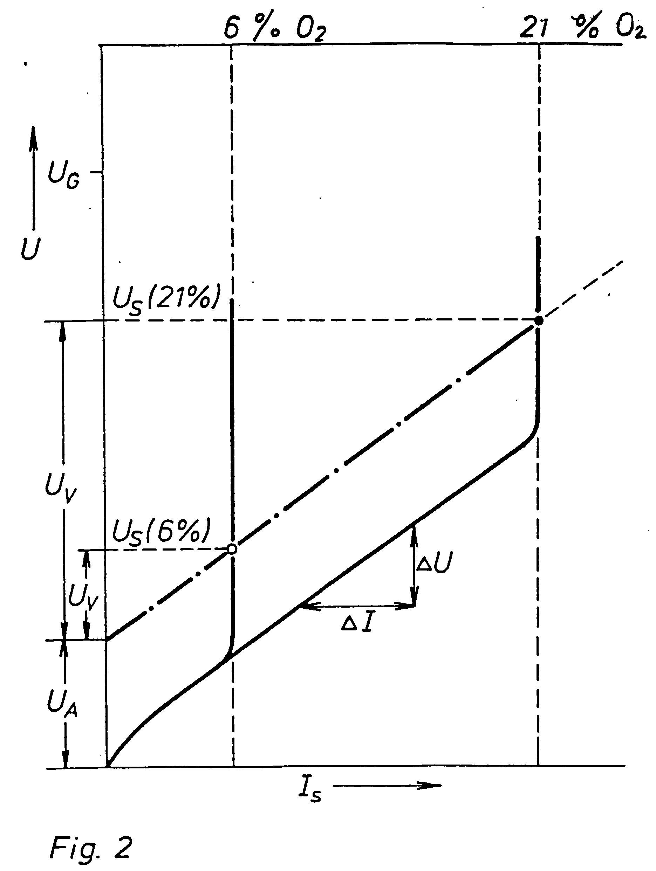

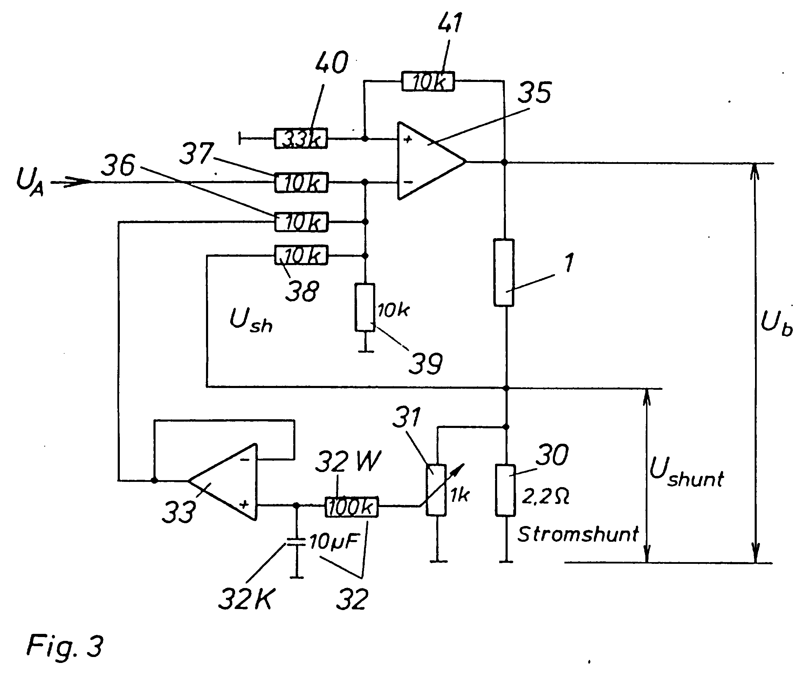

In Figur 2 ist die Strom/Spannungs-Kennlinie dieser Meßvorrichtung dargestellt. Die Steigung dieser Kennlinie ist für die Ermittlung der Spannung $U_s$ erforderliche deren Größe erfindungsgemäß in Abhängigkeit von dem Sondenstrom $I_s$, bestimmt wird, der zwischen den Elektroden 6 und 7 der Meßvorrichtung 1 fließt, und dessen Größe wiederum von der Menge des freien Sauerstoffes innerhalb des zu messenden Gases abhängt Um der Meßvorrichtung 1 die gemäß dem erfindungsgemäßen Verfahren erforderliche Versorgungsspannung $U_s$ zuführen zu können, ist die in Figur 3 dargestellte Schaltung erforderlich. Die der Meßvorrichtung 1 zuzuführende Versorgungsspannung $U_s$ wird aus der Summe von zwei Teilspannungen gebildet. Bei der ersten Teilspannung $U_A$ handelt es sich um eine einstellbare konstante Spannung, die einen Wert zwischen 100 und 600 mV aufweist. Die zweite Teilspannung $U_V$ wird variabel gehalten. Insbesondere wird ihre Größe durch die Größe des Stromsignals an der Meßvorrichtung 1 bestimmt. Für seine Ermittlung wird der Sondenstrom $I_S$ mit der Steigung der Strom/Spannungs-Kennlinie $\alpha = \Delta U / \Delta I$ der Meßvorrichtung 1 multipliziert. Dieser Multiplikationsfaktor $\alpha$ ist eine spezifische Größe der Meßvorrichtung und wird aus der in Figur 2 dargestellten Kennlinie ermittelt.

Erfindungsgemäß wird der Meßvorrichtung 1, insbesondere ihren beiden Elektroden eine Spannung $U_s$ zugeführt, die entsprechend nachfolgender Gleichung ermittelt ist:

$$U_S = U_A + \alpha\, I_S$$

$$\alpha = \Delta U / \Delta I$$

Bei der in Figur 3 dargestellten Vorrichtung ist die Meßvorrichtung 1 nur schematisch dargestellt. Das Stromausgangssignal $I_S$, beziehungsweise der an der Meßvorrichtung 1 anliegende Spannungsabfall wird über einen Stromshunt 30 und einen einstellbaren Potentiometer 31 sowie ein Verzögerungsglied 32 dem positiven Eingang eines ersten Spannungsverstärkers 33 zugeführt. Der Stromshunt 30 wird durch einen ohmschen Widerstand gebildet, dessen Eingang elektrisch leitend mit der Meßvorrichtung 7 verbunden ist. Der Ausgang dieses ohmschen Widerstandes ist an Masse angeschlossen. Zwischen den Ausgang der Meßvorrichtung 1 und den Eingang des ohmschen Widerstandes 30 ist der Eingang des Potentiometers 31 angeschlossen. Der Ausgang des Potentiometers 31 ist ebenfalls an Masse angeschlossen. Sein Abzweig steht mit dem Eingang des das Verzögerungsglied 32 mitbildenden Widerstandes 32W von 100 kOhm in Verbindung. Der Ausgang dieses Widerstandes 32W ist an den positiven Eingang des Spannungsverstärkers 33 angeschlossen. In die elektrische Verbindung dieses Verstärkers 33 und des ohmschen Widerstandes 32W ist der erste Anschluß des zu dem Verzögerungsglied gehörenden Kondensators 32K mit einer Kapazität von 10 µF geschaltet, dessen zweite Kondensatorfläche an Masse angeschlossen ist. Der negative Eingang des Spannungsverstärkers 33 steht mit dem Ausgang des Verstärkers 33 in Verbindung. Die am Ausgang des Verstärkers 33 anstehende Spannung wird dem negativen Eingang eines zweiten Spannungsverstärkers 35 über einen ohmschen Widerstand 36 zugeführt. Über einen ebenso großen ohmschen Widerstand 37 wird dem negativen Eingang des Spannungsverstärkers 35 die konstante Spannung $U_A$ zugeführt, die bei dem hier beschriebenen Ausführungsbeispiel einen Wert von 300 mV aufweist. Ferner wird dem negativen Eingang dieses Spannungsverstärkers 35 der an der Meßvorrichtung anliegende Spannungsabfall über einen ohmschen Widerstand 38 zugeführt, der die gleiche Größe wie die ohmschen Widerstände 36 und 37 aufweist. Über einen weiteren ohmschen Widerstand 39 ist der negative Eingang dieses Spannungsverstärkers 35 zusätzlich an Masse angeschlossen. Die Widerstände 36, 37 und 38 weisen alle eine Größe von 10 kOhm auf. Der positive Eingang des Spannungsverstärkers 35 ist über einen 3,3 kOhm-Widerstand 40 an Masse angeschlossen. Ferner steht er über einen 10 kOhm-Widerstand 41 mit dem Ausgang des Spannungsverstärkers 35 in Verbindung. Der Ausgang des Spannungsverstärkers 35 ist elektrisch leitend mit den Spannungsanschlüssen der Meßvorrichtung 1 verbunden.

Wie anhand von Figur 3 zu sehen ist, liegen an der Vorrichtung die Spannungen $U_b$ und $U_{shunt}$. Die der Meßvorrichtung 1 zuzuführende Spannung, die von dem Spannungsverstärker 35, läßt sich gemäß der nachfolgenden Gleichung berechnen:

$$U_b - U_{Shunt} = U_S = U_A + \alpha\, I_{verz}$$

Damit ergibt sich für die Versorgungsspannung.

$$U_S = U_A + \alpha\, I_{verz}$$

Der Strom $I_{verz}$ entspricht dem verzögerten Sondenstrom.

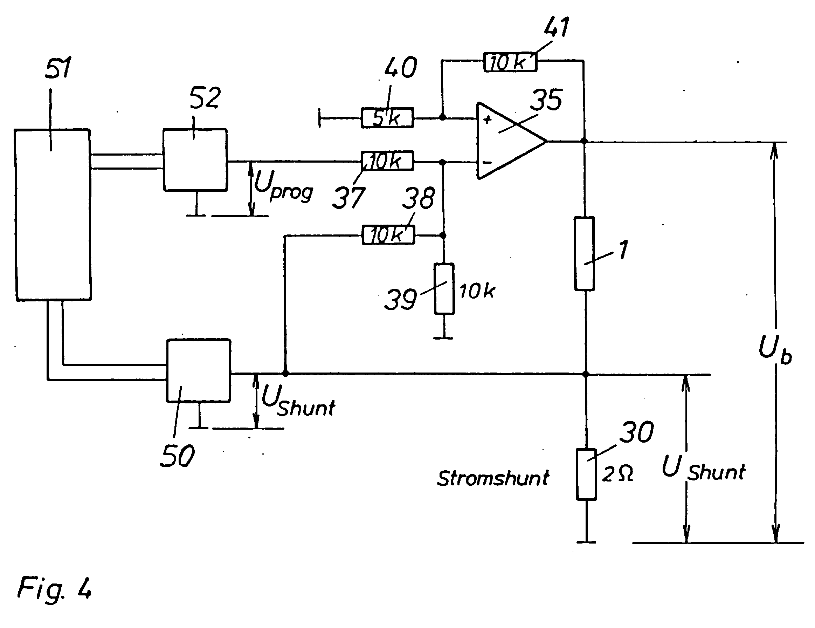

Eine vereinfachte Ausführungsform der oben beschriebenen Vorrichtung zeigt Figur 4. Der Spannungsausgang der Meßvorrichtung 1 ist hierbei wiederum an einen Stromshunt 30 angeschlossen, dessen zweite Anschlußklemme mit Masse in Verbindung steht. In diese elektrische Verbindung ist der Eingang eines Analog/Digital-Wandlers 50 geschaltet. Die Ausgänge dieses Wandlers 50 stehen mit einem Mikroprozessor 51 in Verbindung. Diesem ist ein Digital/Analog-Wandler 52 nachgeschaltet. Der Ausgang des Wandlers 52 ist über einen ohmschen Widerstand 37 an den negativen Eingang eines Spannungsverstärkers 35 angeschlossen. Dieser negative Eingang steht zusätzlich über je einen ohmschen Widerstand 38 und 39 mit Masse und mit dem Spannungsausgang der Meßvorrichtung in Verbindung. Der Spannungsverstärker 35 dient als Gleichspannungsquelle und ist an die Meßvorrichtung, insbesondere an deren Elektroden, angeschlossen. Der positive Eingang dieses Spannungsverstärkers ist über jeweils einen ohmschen Widerstand 40 an Masse und an den Ausgang des Spannungsverstärkers 35 angeschaltet.

Über den Analog/Digital-Wandler 50 wird dem Mikroprozessor ständig der an der Meßvorrichtung 1 anliegende Spannungsabfall zugeführt. Der Mikroprozessor errechnet daraus die für die Meßvorrichtung erforderliche Versorgungsspannung $U_S$ und gibt eine entsprechendes Signal an den ihm nachgeschalteten Digital/Analog-Wandler. Dieser liefert die Spannung $U_{prog}$ an den Spannungsverstärker 35. Diese Spannung entspricht der Versorgungsspannung $U_S$, welche der Meßvorrichtung vom Ausgang des Spannungsverstärkers 35 zuzuführen ist.

## Patentansprüche

1. Verfahren zur Messung der freien Sauerstoffkonzentration in Gasgemischen, insbesondere Verbrennungsgasen, mit einer elektrochemischen Meßvorrichtung (1), welche einen sauerstoffionenleitenden Festelektrolyten (5) aufweist, dessen beiden Elektroden ( 6 und 7) die Versorgungsspannung $U_s$ zugeführt wird, <u>dadurch gekennzeichnet,</u> daß die Versorgungsspannung $U_s$ auf einen maximalen Wert $U_G$ von 1,4V begrenzt wird, und aus der Summe von zwei Teilspannungen $U_A$ und $U_V$ gebildet wird, daß die erste Teilspannung $U_A$ auf einen Wert zwischen 0,1 und 0,6 Volt eingestellt wird, und daß die zweite Teilspannung $U_V$ variabel gehalten und ihr jeweiliger Wert durch die Multiplikation des zwischen den Elektroden (6 und 7) fließenden Sondenstromes $I_S$ mit der Steigung $\alpha = \Delta U/\Delta I$ der Stromspannungskennlinie der Meßvorrichtung (1) gebildet wird.

## Claims

1. Method for measuring the free oxygen concentration in gas mixtures, in particular exhaust gases, with an electrochemical measuring device (1) which has a solid electrolyte (5) which conducts by means of oxygen ions and whose two electrodes (6 and 7) are supplied with the supply voltage $U_S$, <u>characterized</u> in that the supply voltage $U_S$ is limited to a maximum value $U_G$ of 1.4 V, and is formed by the sum of two voltage components $U_A$ and $U_V$, in that the first voltage component $U_A$ is set to a value of between 0.1 and 0.6 volt, and in that the second voltage component $U_V$ is kept variable and its respective value is formed by multiplying the probe current $I_S$ flowing between the electrodes (6 and 7) by the

slope $\alpha = \Delta U/\Delta I$ of the current-voltage characteristic of the measuring device (1).

**Revendications**

1. Procédé de mesure de la concentration d'oxygène libre dans des mélanges gazeux, notamment dans des gaz de combustion, comportant un dispositif de mesure (1) électrochimique qui présente un électrolyte (5) solide conduisant les ions oxygène, aux deux électrodes (6 et 7) duquel est appliquée la tension d'alimentation $U_s$, caractérisé par le fait que la tension d'alimentation $U_s$ est limitée à une valeur maximale $U_G$ de 1,4 V et est formée par la somme de deux tensions partielles $U_A$ et $U_V$, par le fait que la première tension partielle $U_A$ est réglée à une valeur comprise entre 0,1 et 0,6 V et par le fait que la seconde tension partielle $U_V$ est maintenue variable, sa valeur étant formée chaque fois en multipliant le courant de sonde $I_s$ passant entre les électrodes (6 et 7) par la pente $\alpha = \Delta U/\Delta I$ de la caractéristique courant-tension du dispositif de mesure (1).

Fig. 1

Fig. 2

Fig. 3

Fig. 4